# EUROPEAN PATENT SPECIFICATION

(11) **EP 0 448 594 B1**
(45) Date of publication and mention of the grant of the patent: **30.03.1994**
(21) Application number: 90900297.4
(22) Date of filing: 14.12.1989
(51) Int. Cl.: A22C 13/00

(54) **IMPROVED NET MATERIAL**
NETZ-MATERIAL
MATERIAU AMELIORE POUR FILETS

(30) Priority: 16.12.1988 GB 8829436
(43) Date of publication of application: 02.10.1991
(73) Proprietor: SCOBIE & JUNOR (ESTD. 1919) LIMITED, Glasgow G75 0QB, Scotland (GB)
(72) Inventor: WICKLOW, Trevor, Bridge of Weir, PA11 3BE (GB)
(74) Representative: Naismith, Robert Stewart
(86) International application number: GB8901502
(87) International publication number: WO9006686

(56) References cited:
- EP-A- 58 735
- EP-A- 106 965
- DE-B- 1 227 799
- DE-B- 2 546 278
- FR-A- 1 316 978

## Description

The present invention relates to a net for wrapping meat products.

There is a constant demand for netting for wrapping meat products and one type of netting commonly used is described in FR-A-1 316 978 and has an inelastic long yarn and an elasticated cross-yarn which is generally circular or spirally wound in the net and which retains the meat on its rolled or wrapped shape.

There has been a demand for red nets because certain meat products look more attractive than when packed in normal uncoloured netting. Red netting as described in DE-A 1 227 799 exists which is made from materials which are stable up to boiling temperature, that is 100° C, however, if the temperature is increased above 100° C for example the 170° to 180° as occurs in roasting then there is a considerable migration of dye colour from the yarn onto the meat product. In addition some of the materials used in certain existing nettings are unstable at roasting temperatures, and degrade or melt and these characteristics are highly undesirable from the consumer's viewpoint. Furthermore, any materials in use with food must conform to the Materials and Articles in Contact with Food Regulations 1987. Copending UK patent application filed on even date herewith discloses a solution to the problem of obtaining a yarn which is colourfast at roasting temperatures and which is also stable at these temperatures. However, it is in some cases desirable to be able to produce an uncoloured net which is also stable at high temperatures so that the appearance of the meat product is as if it were skilfully wrapped by tying only string, white or red around the meat, so that the wrapped meat appears attractive to the consumer. This is not possible with existing netting because the long chain yarns are opaque and the net has a 'net' appearance. Also other existing clear long chain yarns such as polypropylene or polyethelene are unstable at roasting temperatures and melt or otherwise degrade. French Patent FR-A 2591198 to Rhone-Poulenc discloses a silicon elastomeric thread which can be knitted into a net for wrapping meat products. However, this material is colourless and it is specified that the material must be transparent and colourless and remain like this after cooking for aesthetic reasons of presentation. Consequently, this disclosure does not solve the problem of providing netting which gives the appearance that it is skilfully wrapped by tying string around the meat.

It is an object of the present invention to provide an improved netting which obviates or mitigates at least one of the aforesaid disadvantages.

This is achieved by using a long chain yarn stable at high temperature and an elasticated pigment-dyed cross yarn stable at high temperature, with the long chain yarn being made of a monofilament material.

According to one aspect of the present invention there is provided a net for wrapping a meat product, said net comprising a plurality of long chain yarns which are stable at high temperatures, said long chain yarns being made from a monofilament material and being knitted with elasticated dyed cross yarns, said monofilament yarns and the cross yarns being stable up to a temperature about 200 -210^{o}C and said cross-yarns being pigment-dyed and dyefast at said temperatures.

Preferably the long chain yarns are clear monofilament polyester material.

Preferably the long chain monofilament polyester yarn material is substantially inelastic. Conveniently the cross-knitted yarn material is viscose.

According to another aspect of the present invention there is provided a method of manufacturing netting for wrapping a meat product, said method comprising the steps of selecting a monofilament yarn material which is stable up to a temperature about 200-210^{o}C as the long chain yarns in said netting, selecting a pigment-dyed elasticated cross-yarn material, said material being dyefast at said temperatures, and knitting the long chain monofilament yarns together with said elasticated pigment-dyed cross yarn material stable up to about 200- 210°C to form netting for wrapping said meat product.

Preferably the method includes the step of selecting viscose as the elasticated pigment-dyed cross-yarn material.

These and other aspects of the present invention will become apparent from the following description which includes examples of net in accordance with the above aspects of the invention.

In general it will be understood that meat netting must conform to the above mentioned Food Regulations 1987, and EEC Directive 90/128 as amended by EEC Directive 92/129, and the following examples of products made in accordance with the present invention have met the statutory requirements of the above mentioned Food Regulations 1987 and EEC directives.

### Example 1

An example of an elasticated netting is to be sold under the trademark Scotnet Bacon Roast which consists of long chains of clear monofilament polyester which is knitted with cross-yarns of red viscose. The clear monofilament polyester is stable up to about 200 - 230°C appears in use to be transparent and almost invisible when the meat is wrapped in this netting so that the overall appearance is of a meat product elegantly wrapped only in red elasticated cross-yarn. The red viscose is also stable and colourfast up to temperatures of about 200 - 210°C.

### Example 2

An elasticated meat netting to be sold under the trade mark (Scotnet Clear) consists of long chains of clear monofilament of polyester yarn knitted with cross-yarns of white polyester. The monofilament yarn and elasticated white polyester yarn are stable at elevated cooking temperatures up to about 200 - 230°C. Consequently these net products are suitable for wrapping meat products which are to be roasted.

It will be understood that various modifications may be made to the nets disclosed in the above examples without departing from the scope of the invention. For example, the long chain monofilament yarn and cross chain yarns may be made of any suitable high temperature material which can be knitted into a net for use for all foreseeable cooking conditions that is up to about 200°C to 210°C. Examples of such materials are KEVLAR (trade mark), MYLAR (trade mark). In addition the cross-yarn should be made of a material which is readily pigment dyed and which remains dyefast when in contact with animal or vegetable fats over all foreseeable cooking conditions.

Advantages of the above examples of the present invention are that the nets are stable over a wide range of cooking temperatures, up to about 200 - 210°C and, if dyed netting is in contact with animal or vegetable fats at roasting temperature, up to 200° to 210°C there is no leaching or migration of the dye from the dyed yarn onto the food product.

## Claims

1. A net for wrapping a meat product, said net comprising a plurality of long chain yarns which are stable at high temperatures, said long chain yarns being made from a monofilament material and being knitted with elasticated dyed cross yarns, characterised by said monofilament yarns and the cross yarns being stable up to a temperature about 200 -210^{o}C and said cross-yarns being pigment-dyed and dyefast at said temperatures.

2. A net as claimed in claim 1 wherein the long chain yarns are clear monofilament polyester material.

3. A net as claimed in claim 1 or claim 2 wherein the elasticated cross-knitted yarns is a viscose material.

4. A net as claimed in claim 1 wherein the elasticated cross-knitted yarns is a polyester material.

5. A net as claimed in any preceding claim wherein the long chain yarns are substantially inelastic.

6. A net as claimed in any preceding claim wherein the pigment-dyed cross-knitted yarn material is viscose.

7. A method of manufacturing netting for wrapping a meat product, said method comprising the steps of selecting a monofilament yarn material which is stable up to a temperature about 200- 210°C as the long chain yarns in said netting, selecting a pigment-dyed elasticated cross-yarn material, said material being dyefast at said temperatures, and knitting the long chain monofilament yarns together with said elasticated pigment-dyed cross yarn material stable up to about 200- 210°C to form netting for wrapping said meat product.

8. A method as claimed in claim 7 wherein the method includes the step of selecting viscose as the elasticated pigment-dyed cross-yarn material.

9. A method as claimed in claim 7 or claim 8 wherein the method includes the step of manufacturing the long chain yarns from a clear monofilament polyester material.

## Patentansprüche

1. Netz zum Einwickeln eines Fleischprodukts, wobei das Netz mehrere gegen hohe Temperaturen beständige lange Kettgarne aufweist, die aus einem monofilen oder Endlosmaterial bestehen und mit elastischen, gefärbten Kreuzgarnen gewirkt sind, dadurch gekennzeichnet, daß die monofilen Garne und die Kreuzgarne bis zu einer Temperatur Von etwa 200-210°C hitzebeständig sind und daß die Kreuzgarne pigmentgefärbt und bei den genannten Temperaturen farbecht sind.

2. Netz nach Anspruch 1, wobei die langen Kettgarne aus durchsichtigem monofilem Polyestermaterial bestehen.

3. Netz nach Anspruch 1 oder Anspruch 2, wobei die elastischen, kreuzgewirkten Garne aus einem Viskosematerial bestehen.

4. Netz nach Anspruch 1, wobei die elastischen kreuzgewirkten Garne aus einem Polyestermaterial bestehen.

5. Netz nach einem der vorstehenden Ansprüche, wobei die langen Kettgarne im wesentlichen unelastisch sind.

6. Netz nach einem der vorstehenden Ansprüche, wobei das pigmentgefärbte, kreuzgewirkte Garnmaterial Viskose ist.

7. Verfahren zur Herstellung von Netzen zum Einwickeln eines Fleischprodukts, mit den folgenden Schritten: Auswahl eines monofilen, bis zu einer Temperatur von etwa 200-210°C hitzebeständigen Garnmaterials als lange Kettgarne in den Netzen, Auswahl eines pigmentgefärbten, elastischen Kreuzgarnmaterials, wobei das Material bei den genannten Temperaturen farbecht ist, und Wirken der monofilen langen Kettgarne mit dem elastischen, pigmentgefärbten, bis etwa 200-210°C hitzebeständigen Kreuzgarnmaterial zu einem Netz zum Einwickeln des Fleischprodukts.

8. Verfahren nach Anspruch 7, wobei das Verfahren den Schritt der Auswahl von Viskose als des elastischen, pigmentgefärbten Kreuzgarnmaterials aufweist.

9. Verfahren nach Anspruch 7 oder Anspruch 8, wobei das Verfahren den Schritt der Herstellung der langen Kettgarne aus einem durchsichtigen monofilen Polyestermaterial aufweist.

## Revendications

1. Un filet pour envelopper un produit de viande, ledit filet comprenant plusieurs fils à chaîne longue, résistants à des températures élevées, lesdits fils à chaîne longue étant composés d'un matériau monofilament et étant tricotés avec des fils croisés teints élastiques, caractérisé en ce que lesdits fils monofilaments et les fils croisés sont résistants jusqu'à une température comprise entre 200 et 210°C et en ce que lesdits fils croisés à teinture pigmentaire sont teints en colorants solides en présence des dites températures.

2. Un filet selon la revendication 1, dans lequel les fils à chaîne longue sont composés d'an matériau de polyester monofilament clair.

3. Un filet selon les revendications 1 ou 2, dans lequel les fils élastiques tricotés croisés sont composés d'un matériau de viscose.

4. Un filet selon la revendication 1, dans lequel les fils élastiques tricotés croisés sont composés d'un matériau de polyester.

5. Un filet selon l'une quelconque des revendications précédentes, dans lequel les fils à chaîne longue sont pratiquement inélastiques.

6. Un filet selon l'une quelconque des revendications précédentes, dans lequel le matériau du fil tricoté croisé à teinture pigmentaire est de la viscose.

7. Un procédé de fabrication de filets pour envelopper un produit de viande, ledit procédé comprenant les étapes de sélection d'un matériau de fil monofilament, résistant jusqu'à une température comprise entre 200 et 210°C, pour constituer les fils à chaîne longue dans lesdits filets, de sélection d'un matériau de fil croisé élastique à teinture pigmentaire, ledit matériau étant teint en colorants solides en présence de ces températures, et de tricotage des fils monofilaments à chaîne longue ensemble avec ledit matériau de fils croisés à teinture pigmentaire élastiques, résistants jusqu'à des températures comprises entre 200 et 210°C, pour former des filets en vue de l'emballage du dit produit de viande.

8. Un procédé selon la revendication 7, dans lequel le procédé englobe l'étape de sélection de viscose comme matériau du fil croisé élastique à teinture pigmentaire.

9. Un procédé selon les revendications 7 ou 8, dans lequel le procédé englobe l'étape de fabrication des fils à chaîne longue à partir d'un matériau de polyester monofilament clair.
